# FASCICULE DE BREVET EUROPEEN

(11) **EP 1 080 317 B1**
(45) Date de publication et mention de la délivrance du brevet: **31.07.2002**
(21) Numéro de dépôt: 99922223.5
(22) Date de dépôt: 20.05.1999
(51) Int. Cl.: F16D 23/14

(54) **BUTEE DE DEBRAYAGE A AUTO-ALIGNEMENT PAR MANCHON**
SICH MITTELS HÜLSE SELBSTZENTRIERENDES KUPPLUNGSAUSRÜCKLAGER
CLUTCH RELEASE BEARING SELF-ALIGNED BY A SLEEVE

(30) Priorité: 27.05.1998 FR 9806686
(43) Date de publication de la demande: 07.03.2001
(73) Titulaire: SKF FRANCE, F-92140 Clamart (FR)
(72) Inventeur: PONSON, Frédéric, F-37230 Luynes (FR); GIRARDIN, Hervé, F-37300 Joue Les Tours (FR); HOUDAYER, Christophe, F-37000 Tours (FR); ARNAULT, Benoit, F-37100 Tours (FR)
(74) Mandataire: Casalonga, Axel
(86) Numéro de dépôt international: FR9901193
(87) Numéro de publication internationale: WO9961812

(56) Documents cités:
- EP-A- 0 807 775
- DE-A- 3 709 237
- FR-A- 2 663 702
- GB-A- 2 045 381

## Description

La présente invention concerne le domaine des butées de débrayage, notamment pour véhicules automobiles, du genre comprenant un élément de manoeuvre pouvant se mouvoir en translation sous l'action d'un organe de commande tel qu'une fourchette de débrayage ou le piston d'une commande hydraulique, un roulement de butée destiné à agir sur le dispositif débrayeur d'un embrayage, tel qu'un diaphragme et, entre le roulement de butée et l'élément de manoeuvre, un organe élastique de liaison d'auto-alignement assurant une liaison axiale entre le roulement de butée et l'élément de manoeuvre et permettant au roulement de butée de venir s'autocentrer par rapport au diaphragme dans le cas où l'axe du diaphragme et l'axe du roulement de butée ne sont pas exactement confondus lors du montage. Une telle butée est décrite par exemple dans le document FR-A-2 663 702.

L'organe élastique de liaison d'auto-alignement est constitué par un manchon élastique situé entre l'alésage de la bague non tournante du roulement de butée et une portée cylindrique de l'élément de manoeuvre. Le manchon, réalisé généralement en élastomère ou en matériau souple équivalent, comporte dans son alésage une pluralité de nervures radialement en saillie par rapport à l'alésage et qui s'étendent axialement sur la largeur du manchon. Ces nervures sont légèrement inclinées et ont la forme de lames dont les extrémités libres viennent en appui sur la portée cylindrique de l'organe de manoeuvre. Les nervures peuvent ainsi se déformer et permettre au roulement de se déplacer radialement par rapport à l'élément de manoeuvre pour s'auto-aligner sur le diaphragme en fonctionnement.

L'organe élastique de liaison d'auto-alignement est solidarisé axialement à la bague non tournante du roulement de butée par complémentarité de forme au moyen d'une collerette radiale ou d'un bourrelet annulaire situé à son extrémité arrière, opposée au diaphragme, et coopérant avec une partie étagée de l'alésage de la bague, et d'une rainure annulaire aménagée à son extrémité frontale et venant coopérer par complémentarité de forme avec un retour radial de la bague intérieure. Un bourrelet annulaire réalisé en saillie sur l'extrémité libre frontale de l'élément de manoeuvre forme une butée axiale pour l'extrémité axiale des nervures du manchon.

L'organe élastique de liaison d'auto-alignement permet donc également la retenue axiale du roulement de butée sur l'élément de manoeuvre. Pour le montage, on met tout d'abord en place le manchon élastique dans la bague non tournante, on introduit l'élément de manoeuvre dans le manchon élastique par un mouvement axial combiné, si nécessaire, à un mouvement de rotation qui favorise la flexion des nervures du manchon. Des pentes ou des chanfreins aménagés à l'extrémité axiale arrière des nervures du manchon favorisent le passage du bourrelet radial.

Si ce type de manchon d'auto-alignement donne satisfaction dans la plupart des applications, il peut toutefois poser problème dans le cas où l'alésage de la bague intérieure présente une très faible longueur axiale et ne possède pas de retour radial dirigé vers l'intérieur sur son extrémité frontale et/ou de partie étagée dans son alésage. Dans ce cas, la solidarisation axiale entre la bague non tournante et le manchon élastique est difficile à réaliser et il peut se produire, lors de l'introduction de l'élément de manoeuvre sur le roulement équipé du manchon, un déplacement axial inopiné dudit manchon et un mauvais positionnement de ce dernier par rapport aux éléments environnants, avec des conséquences néfastes sur le fonctionnement ultérieur de la butée. Ce phénomène est d'autant plus gênant qu'il est difficile à détecter du fait que le manchon élastique est logé entre le roulement et l'élément de manoeuvre.

La présente invention vise à résoudre ce problème en proposant un manchon qui conserve toutes ses capacités d'auto-alignement, mais qui peut être fermement maintenu à l'intérieur de la bague non tournante, même si les dimensions axiales de cette dernière sont très réduites et si elle ne possède pas de retour dirigé vers l'intérieur pour le verrouillage axial du manchon.

Le dispositif de butée de débrayage, selon l'invention, est du type comprenant un palier à roulement pourvu d'une bague tournante et d'une bague non tournante, et monté sur un élément de manoeuvre muni d'une partie tubulaire et d'une collerette radiale sur laquelle vient en appui une portion radiale de la bague non tournante. Le dispositif comprend également un manchon d'auto-alignement disposé entre la bague non tournante et l'élément de manoeuvre. Le manchon d'auto-alignement est fixé par serrage sur une portée cylindrique de l'organe qui le supporte. *Le manchon* comprend une armature métallique pourvue d'une portion tubulaire délimitée radialement par deux surfaces de révolution, une des deux surfaces étant recouverte par de la matière élastique formant des moyens d'auto-alignement. L'autre surface de l'armature métallique est recouverte, au moins partiellement, par de la matière synthétique formant des moyens de serrage sur l'organe qui supporte le manchon, la partie tubulaire de l'armature étant disposée au niveau de la portée cylindrique de l'organe de support du manchon. L'armature métallique permet d'obtenir une rigidité satisfaisante du manchon.

Le manchon d'auto-alignement peut être supporté par l'élément de manoeuvre ou par la bague non tournante. Dans ces deux cas, il suffit que cet organe de support soit pourvu d'une portée cylindrique de faible longueur. Le serrage est suffisant pour éviter tout risque de désalignement et de mauvais positionnement du manchon.

Dans un mode de réalisation de l'invention, le matériau élastique du manchon séparant la partie tubulaire de l'armature et l'organe de support du manchon, est prévu d'une épaisseur faible, par exemple comprise entre une à trois fois celle de l'armature.

Avantageusement, l'armature se prolonge par une portion d'étanchéité avec la bague tournante. L'armature peut se prolonger, à ses deux extrémités, par une portion d'étanchéité avec la bague tournante.

Dans un mode de réalisation de l'invention, l'armature vient en butée axiale contre une surface radiale de l'organe de support du manchon.

Avantageusement, le manchon comprend des nervures axiales d'emmanchement sur son organe de support.

Le manchon d'auto-alignement peut comprendre un bourrelet annulaire apte à *maintenir ledit manchon par rapport à la bague non tournante.*

Le manchon peut comprendre des moyens pour filtrer les vibrations, séparant la collerette radiale et la bague non tournante. Le manchon peut comprendre des moyens d'étanchéité aptes à coopérer avec la périphérie de la bague *tournante.*

Le revêtement élastique du manchon séparant la partie tubulaire de l'armature et son organe de support, permet d'absorber les dispersions dimensionnelles et les déformations relativement importantes inhérentes au procédé de fabrication des éléments tels que les bagues du roulement par emboutissage et traitement thermique, alors qu'un emmanchement direct de l'armature sur la bague impliquerait une maîtrise dimensionnelle meilleure et un procédé de fabrication plus onéreux sous peine d'avoir dans certains cas des serrages excessifs ou insuffisants. La proximité de l'armature par rapport à l'organe de support permet de rigidifier toute cette zone du manchon et permet un emmanchement avec serrage suffisant pour éviter par la suite tout démontage inopiné du manchon. Le manchon est donc efficacement fixé, soit sur la bague non tournante, soit sur une portée cylindrique de l'élément de manoeuvre.

La présente invention sera mieux comprise et d'autres avantages apparaîtront à la lecture de la description détaillée de quelques modes de réalisation pris à titre d'exemples nullement limitatifs et illustrés par les dessins annexés, sur lesquels :
la figure 1 est une vue en coupe axiale d'un roulement de butée selon l'invention;
la figure 2 est une vue similaire à la figure 1 d'un autre mode de réalisation de l'invention;
la figure 3 est une vue de détail de la figure 2;
les figures 4 à 6 sont des vues similaires à la figure 1 de différents modes de réalisation de l'invention;
la figure 7 est une vue partielle en coupe radiale d'un dispositif de butée selon un autre mode de réalisation de l'invention;
la figure 8 est une vue partielle en coupe radiale d'un manchon selon un autre mode de réalisation de l'invention; et
la figure 9 est une vue en coupe axiale d'un manchon conforme à l'invention monté sur un organe de manoeuvre.

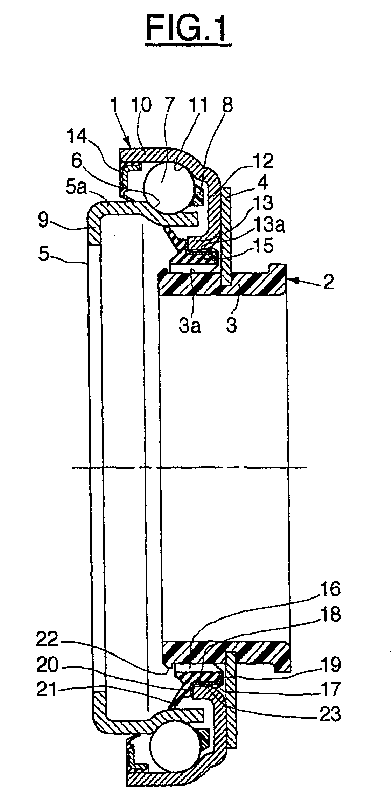

Telle qu'elle est illustrée sur la figure 1, la butée de débrayage conforme à l'invention comprend un palier à roulement 1 monté sur un élément de manoeuvre 2, lequel comporte une portion tubulaire 3 qui peut coulisser par rapport à un tube-guide, non représenté, et une collerette radiale 4. La collerette radiale 4 de l'élément de manoeuvre 2 est formée par un anneau métallique sur lequel est surmoulée la portion cylindrique 3. La collerette radiale 4 a de préférence subi un traitement de durcissement superficiel, et sert de surface de contact pour un organe de commande, non représenté, et qui exerce un effort en direction axiale pour provoquer le déplacement de la butée dans son ensemble lors d'une opération de débrayage.

Le palier à roulement comprend une bague intérieure de roulement 5 à paroi mince, réalisée par emboutissage d'une tôle ou d'un tube présentant un chemin de roulement torique 6 pour une rangée de billes 7 maintenues dans une cage 8. La bague intérieure 5 comprend également une prolongation tubulaire 5a dirigée à l'opposé de la collerette radiale 4 et se terminant par un rebord radial 9 apte à venir en contact de frottement avec les doigts d'un diaphragme d'embrayage, non représenté.

Le palier à roulement 1 se complète par une bague extérieure 10 également à paroi mince, réalisée par emboutissage d'une tôle ou d'un tube qui présente un chemin torique 11 pour les billes 7, ainsi qu'une portion radiale 12 dirigée vers l'intérieur qui vient en contact de frottement sur la collerette radiale 4 et qui se prolonge, à son extrémité libre intérieure, par un rebord cylindrique 13 dirigé à l'opposé de la collerette radiale 4, radialement entre la bague intérieure 5 et la portion cylindrique 3 de l'élément de manoeuvre 2. Un organe d'étanchéité 14 est emmanché sur un alésage de la bague extérieure 10 à proximité du chemin de roulement 11 et vient frotter sur la prolongation tubulaire 5a.

Un manchon d'auto-alignement 15 est disposé entre la portion cylindrique 3 et le rebord cylindrique 13 de la bague extérieure 10. Le manchon élastique 15, réalisé par exemple en élastomère ou en caoutchouc naturel, présente une pluralité de nervures d'auto-alignement 16 parallèles à l'axe de la butée, dirigées vers l'intérieur et dont le bord libre interne entre en contact avec la surface extérieure 3a de la portion cylindrique 3 de l'élément de manoeuvre 2, laquelle est réalisée en matière synthétique, rigide, par exemple en matière synthétique additionnée de charges minérales ou analogue.

Le manchon élastique 15 comprend une armature métallique 17 annulaire, pourvue d'une portion cylindrique 18 disposée axialement au niveau du rebord cylindrique 13 et radialement à faible distance de ce dernier, d'une portion radiale 19 prolongeant la portion cylindrique 18 du côté de la collerette radiale 4, dirigée vers l'intérieur et augmentant la rigidité de l'armature, et d'une portion radiale 20 s'étendant vers l'extérieur de l'autre côté de la portion cylindrique 18 et entrant en contact avec l'extrémité libre du rebord cylindrique 13, formant ainsi une butée axiale. La portion cylindrique 18 et la portion radiale 19 de l'armature 17 sont recouvertes de matériau élastique. Le revêtement élastique 23 disposé entre la portion cylindrique 18 et l'alésage 13a du rebord cylindrique 13 est de faible épaisseur, par exemple égale à l'épaisseur de la tôle constituant l'armature métallique 17 ou légèrement plus épaisse. Ce revêtement 23 permet en coopération avec l'armature 17 un serrage adéquat dans l'alésage 13a du rebord cylindrique 13, l'alésage 13a formant ainsi une portée cylindrique d'emmanchement pour le manchon.

Le manchon élastique 15 comprend une lèvre annulaire 21 qui assure l'étanchéité du palier à roulement 1 en entrant en contact avec la bague intérieure tournante 5, en s'étendant radialement vers l'extérieur et axialement à l'opposé de la collerette radiale 4 à partir de la portion radiale 20 de l'armature métallique 17. Une nervure annulaire 22 disposée à l'extrémité de la portion cylindrique 3, assure le maintien du palier 1 sur la douille de guidage 2 avant le montage sur le tube-guide. A cet effet, on prévoit que l'extrémité frontale des nervures 16 est sensiblement perpendiculaire à l'axe de la butée afin d'empêcher tout démontage. Le manchon 15 vient ainsi s'emmancher sur le rebord cylindrique 13 de la bague non tournante 10 où il reste parfaitement centré et maintenu. Son positionnement axial est garanti par le contact entre la portion radiale 20 de l'armature métallique 17 et la face frontale du rebord cylindrique 13.

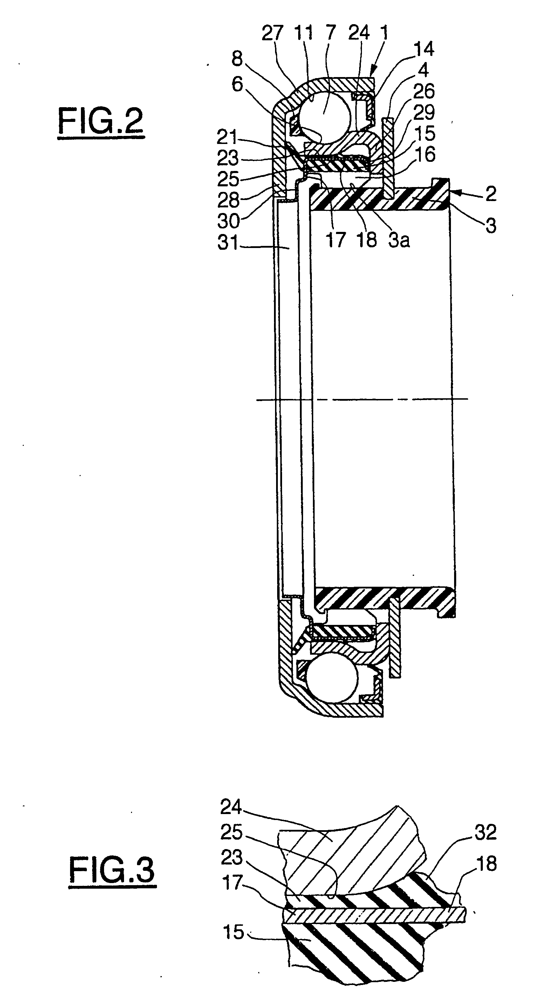

Le mode de réalisation illustré sur la figure 2 est semblable au précédent, à ceci près que la bague intérieure 24 est non tournante et possède un alésage cylindrique 25 sur lequel est emmanché le manchon 15, et un rebord radial 26 dirigé vers l'intérieur et en contact avec la collerette radiale 4. La bague extérieure 27, tournante, possède un retour radial 28 dirigé vers l'intérieur et apte à coopérer avec un diaphragme d'embrayage non représenté.

L'armature métallique 17 du manchon 15 comprend une portion radiale 29 s'étendant vers l'intérieur à partir de la portion cylindrique 18 et disposée à faible distance du rebord radial 26 de la bague intérieure 24 tout en étant recouverte d'une mince couche de caoutchouc ou d'élastomère. En variante, on pourrait prévoir un contact direct entre la portion radiale 29 et le rebord radial 26. On forme ainsi une surface de référence qui permet un positionnement axial précis du manchon 15 par rapport à la bague non tournante 24. Du côté opposé à la collerette 4, l'armature 17 se prolonge par une portion étagée 30 qui se termine par une portion cylindrique 31 disposée à faible distance de l'extrémité libre du retour radial 28 de la bague extérieure 27 avec laquelle elle forme un passage étroit renforçant l'étanchéité du palier 1.

Comme on peut le voir sur la figure 3, un bourrelet annulaire 32 est disposé en surépaisseur par rapport au revêtement 23 séparant la portion cylindrique 18 de l'armature métallique 17 et la bague intérieure 24 à la limite de l'alésage 25. Le bourrelet 32 coopère ainsi avec un arrondi de la bague intérieure 24, ce qui améliore le maintien du positionnement axial du manchon 15 par rapport à la bague non tournante 24 en évitant un retour du manchon 15 à la fin du mouvement d'emmanchement dû à l'élasticité du revêtement 23 et à son adhésion sur l'alésage 25.

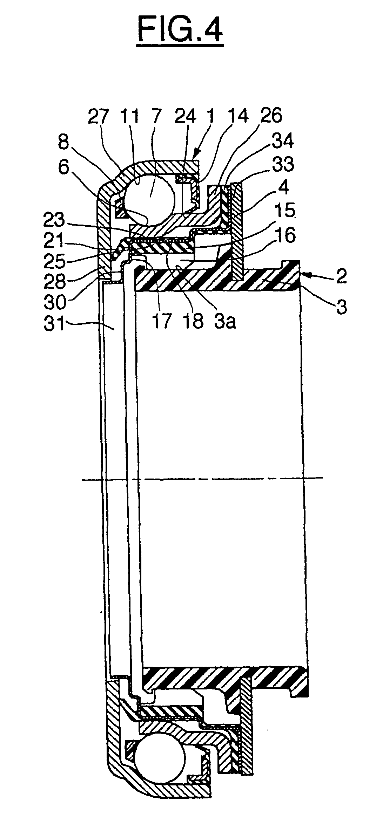

Le mode de réalisation illustré sur la figure 4 est proche de celui illustré sur la figure 2, à ceci près que le rebord radial 26 de la bague intérieure non tournante 24 est orienté vers l'extérieur. L'armature 17 du manchon 15 se prolonge par une portion radiale 33 disposée entre la collerette radiale 4 et le rebord radial 26, en contact direct avec la collerette radiale 4. La portion radiale 33 est séparée du rebord radial 26 par un revêtement 34 venu du moulage avec le reste du manchon 15. On obtient ainsi un excellent système de filtration et d'amortissement des vibrations au niveau de la butée 1 susceptible de réduire de façon importante la transmission de vibration et de bruit entre l'ensemble moteur-boîte de vitesses et l'habitacle du véhicule.

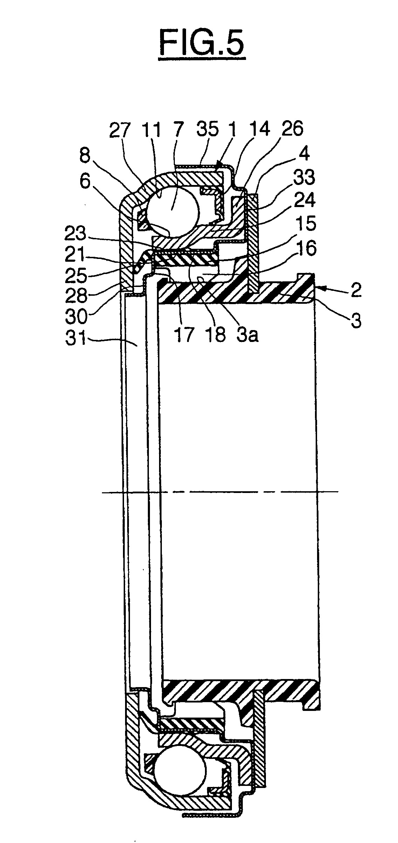

Le mode de réalisation illustré sur la figure 5 est proche de celui illustré sur la figure 4, à ceci près que le manchon 15 est dépourvu de revêtement 34, la portion radiale 33 étant directement en contact d'un côté avec la collerette radiale 4 et de l'autre côté avec le rebord radial 26 de la bague intérieure non tournante 24. Cette portion radiale 33 se prolonge vers l'extérieur par une portion cylindrique 35 entourant la bague extérieure 27 et formant avec cette dernière un passage étroit renforçant l'étanchéité du palier à roulement 1.

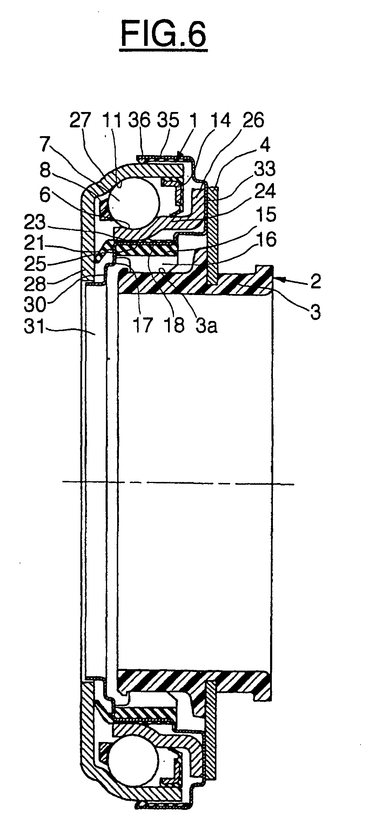

Dans la variante de la figure 6, la portion cylindrique 35 est pourvue d'un revêtement élastique 36, obtenu par exemple par surmoulage, et formant une lèvre d'étanchéité en contact de frottement avec la surface extérieure cylindrique de la bague extérieure 27.

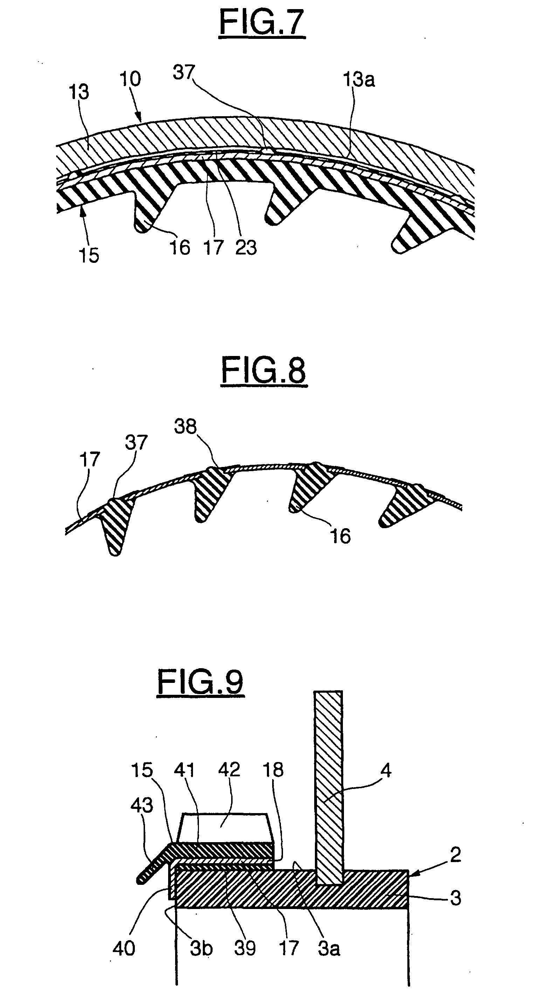

Sur la figure 7, on voit plus particulièrement l'emmanchement entre le manchon 15 et une portée cylindrique de bague non tournante, par exemple l'alésage 13a du rebord cylindrique 13 de la bague non tournante 10 de la figure 1. Afin de mieux maîtriser les efforts d'emmanchement entre le manchon élastique 15 et la bague non tournante 10, et de limiter les efforts à des valeurs raisonnables, des cannelures axiales parallèles 37 de matière élastique sont prévues sur la surface extérieure du revêtement 23 séparant la partie cylindrique 18 de l'armature 17 et le rebord cylindrique 13. On diminue ainsi la surface de contact entre la matière élastique et l'acier constituant la bague 10, en évitant ainsi les efforts d'emmanchement excessifs tout en assurant une retenue suffisante.

Sur la figure 8, est illustré un mode de réalisation qui peut être utilisé pour une application dans laquelle le coût de la matière utilisée pour la matière souple du manchon 15 est important, par exemple dans le cas des élastomères fluorés pour haute température. On cherche alors à réduire fortement la quantité de matière nécessaire. On utilise une armature métallique 17 pourvue de perforations 38 servant à la fois à l'ancrage de la matière souple et à sa circulation pendant le moulage. On se contente alors de surmouler des nervures axiales d'emmanchement 37 sur l'extérieur de l'armature 17 et des nervures flexibles 16 sur l'intérieur, les nervures axiales d'emmanchement 37 et les nervures 16 étant surmoulées au droit des perforations 38. La surface restante de l'armature 17 n'est pas recouverte d'élastomère d'où une économie de matière et de masse.

Ce mode de réalisation permet en outre d'obtenir une butée extrêmement compacte, notamment dans le sens radial, par rapport à une butée conventionnelle.

On peut aussi prévoir de disposer le manchon 15 sur la partie cylindrique 3 de la douille de guidage 2, voir figure 9. Le manchon comprend alors un insert métallique 17 pourvu d'une portion cylindrique 18 entourant radialement la surface extérieure 3a de la partie cylindrique 3 tout en étant séparé de cette dernière par un revêtement élastique 39, et d'une portion radiale 40 disposée du côté opposé à la collerette radiale 4 et s'étendant vers l'intérieur en venant en contact avec la face frontale 3b de la partie cylindrique 3, pour garantir un positionnement axial précis du manchon 15 par rapport à la douille de guidage 2. La surface extérieure 3a de la partie cylindrique forme ainsi une portée cylindrique d'emmanchement pour le manchon. Le manchon 15 comprend également un revêtement 41 disposé autour de la portion cylindrique 18 et duquel sont issues les nervures d'auto-alignement 42 orientées vers l'extérieur. Une lèvre d'étanchéité 43 est prévue pour venir en contact avec la bague extérieure du palier, non représenté.

Grâce à l'invention, on dispose d'un manchon adapté pour être disposé entre un organe de manoeuvre et un palier à roulement, tout en étant fixé sur une courte portion cylindrique de support. On supprime les risques de mauvais positionnement du manchon susceptibles de générer des défauts de fonctionnement de l'embrayage. Enfin, la butée ainsi obtenue est très compacte et de fabrication économique.

## Revendications

1. Dispositif de butée de débrayage du type comprenant un palier à roulement (1) pourvu d'une bague tournante (5) et d'une bague non tournante (10), et monté sur un élément de manoeuvre (2) muni d'une partie tubulaire (3) et d'une collerette radiale (4) sur laquelle vient en appui une portion radiale de la bague non tournante, et un manchon d'auto-alignement (15) disposé entre la bague non tournante et l'élément de manoeuvre, le manchon d'auto-alignement étant fixé par serrage sur une portée cylindrique de l'organe qui le supporte, ***caractérisé par le fait que** le manchon comprend* une armature métallique (17) pourvue d'une portion tubulaire délimitée radialement par deux surfaces de révolution, une des deux surfaces étant recouverte par de la matière élastique formant des moyens d'auto-alignement, l'autre surface de l'armature métallique *étant* recouverte, au moins partiellement, par de la matière synthétique formant des moyens de serrage sur l'organe qui supporte le manchon, la partie tubulaire de l'armature étant disposée au niveau de la portée cylindrique de l'organe de support du manchon.

2. Dispositif selon la revendication 1, **caractérisé par le fait que** le manchon d'auto-alignement est supporté par l'élément de manoeuvre.

3. Dispositif selon la revendication 1, **caractérisé par le fait que** le manchon d'auto-alignement est supporté par la bague non tournante.

4. Dispositif selon la revendication 2 ou 3, **caractérisé par le fait que** le matériau élastique dudit manchon séparant la partie tubulaire de l'armature et l'organe de support du manchon est prévu d'une épaisseur faible, comprise entre une à trois fois celle de l'armature.

5. Dispositif selon l'une quelconque des revendications 2 à 4, **caractérisé par le fait que** l'armature se prolonge par une portion d'étanchéité avec la bague tournante.

6. Dispositif selon la revendication 5, **caractérisé par le fait que** l'armature se prolonge, à ses deux extrémités, par une portion d'étanchéité avec la bague tournante.

7. Dispositif selon l'une quelconque des revendications 2 à 6, **caractérisé par le fait que** l'armature vient en butée axiale contre une surface radiale de l'organe de support du manchon.

8. Dispositif selon l'une quelconque des revendications 2 à 7, **caractérisé par le fait que** le manchon comprend des nervures axiales d'emmanchement (37) sur son organe de support.

9. Dispositif selon l'une quelconque des revendications précédentes, **caractérisé par le fait que** le manchon d'auto-alignement comprend un bourrelet annulaire (32) apte à *maintenir ledit manchon par rapport à la bague non tournante.*

10. Dispositif selon l'une quelconque des revendications précédentes, **caractérisé par le fait que** le manchon comprend des moyens pour filtrer les vibrations, séparant la collerette radiale et la bague non tournante.

11. Dispositif selon l'une quelconque des revendications précédentes, **caractérisé par le fait que** le manchon comprend des moyens d'étanchéité aptes à coopérer avec la périphérie de la bague *tournante.*

## Patentansprüche

1. Kupplungsausrücklageranordnung in der Bauart mit einem Wälzlager (1), das einen umlaufenden Ring (5) und einen stillstehenden Ring (10) aufweist und an einem Ausrückelement (2) angebracht ist, das einen rohrförmigen Abschnitt (3) und einen radialen Kragen (4) umfasst, auf dem ein radialer Abschnitt des stillstehenden Rings zur Anlage kommt, und mit einer zwischen dem stillstehenden Ring und dem Ausrückelement angeordneten Selbstzentrierungshülse (15), wobei die Selbstzentrierungshülse auf einem zylindrischen Sitz des die Hülse tragenden Elements durch Klemmwirkung befestigt ist, **dadurch gekennzeichnet, dass** die Hülse einen aus Metall geformten Träger (17) aufweist, der mit einem rohrförmigen Abschnitt vesehen ist, der in radialer Richtung durch zwei rotationssymetrische Flächen begrenzt ist, wobei eine der beiden Flächen mit einem elastischen Werkstoff beschichtet ist, um Mittel zur Selbstzentrierung zu schaffen, die andere Fläche des aus Metall geformten Trägers zumindest teilweise mit einem Kunststoff beschichtet ist, um Mittel für das Festklemmen auf dem die Hülse tragenden Element bereitzustellen, und der rohrförmige Abschnitt des Trägers in Höhe des zylindrischen Sitzes des die Hülse tragenden Elements zu liegen kommt.

2. Vorrichtung nach Anspruch 1, **dadurch gekennzeichnet, dass** die Selbstzentrierungshülse durch das Ausrückelement getragen wird.

3. Vorrichtung nach Anspruch 1, **dadurch gekennzeichnet, dass** die Selbstzentrierungshülse durch den stillstehenden Ring getragen wird.

4. Vorrichtung nach Anspruch 2 oder 3, **dadurch gekennzeichnet, dass** der elastische Werkstoff der Hülse, der den rohrförmigen Abschnitt des Trägers und das die Hülse tragende Element voneinander trennt, mit einer geringen Dicke aufgebracht ist, die zwischen dem ein- bis dreifachen der Dicke jenes Trägers beträgt.

5. Vorrichtung nach einem der Ansprüche 2 bis 4, **dadurch gekennzeichnet, dass** der Träger sich in einem mit dem umlaufenden Ring abdichtenden Abschnitt fortsetzt.

6. Vorrichtung nach Anspruch 5, **dadurch gekennzeichnet, dass** der Träger sich an dessen beiden Enden in einem mit dem umlaufenden Ring abdichtenden Abschnitt fortsetzt.

7. Vorrichtung nach einem der Ansprüche 2 bis 6, **dadurch gekennzeichnet, dass** der Träger gegen eine Radialfläche des die Hülse tragenden Elements axial zur Anlage kommt.

8. Vorrichtung nach einem der Ansprüche 2 bis 7, **dadurch gekennzeichnet, dass** die Hülse auf ihrem Trägerelement axiale Aufsteckrippen (37) umfasst.

9. Vorrichtung nach einem der vorhergehenden Ansprüche, **dadurch gekennzeichnet, dass** die Selbstzentrierungshülse einen ringförmigen Wulst (32) aufweist, der dazu dient, die Hülse bezüglich des stillstehenden Rings zu sichern.

10. Vorrichtung nach einem der vorhergehenden Ansprüche, **dadurch gekennzeichnet, dass** die Hülse Mittel enthält, die dazu dienen Erschütterungen abzufangen, indem die Mittel den radialen Kragen und den stillstehenden Ring voneinander trennen.

11. Vorrichtung nach einem der vorhergehenden Ansprüche, **dadurch gekennzeichnet, dass** die Hülse Dichtungsmittel umfasst, die geeignet sind, um mit dem Umfang des umlaufenden Rings zusammenzuwirken.

## Claims

1. Clutch release bearing of the type including a rolling bearing (1) which has a rotating race (5) and a fixed race (10), and mounted on a manoeuvring member (2) which has a tubular part (3) and a radial flange (4) on which a radial portion of the fixed race bears, and a self-alignment sleeve (15) disposed between the fixed race and the manoeuvring member, the self-alignment sleeve being clamped to a cylindrical bearing surface of the member which supports it, **characterized in that** the sleeve includes a metal armature (17) which has a tubular portion delimited in the radial direction by two circular section surfaces, one of the two surfaces being covered with the elastic material forming self-alignment means, the other surface of the metal armature being at least partly covered with the synthetic material forming means for clamping to the member which supports the sleeve, the tubular part of the armature being at the level of the cylindrical bearing surface of the support member of the sleeve.

2. Bearing according to Claim 1, **characterized in that** the self-alignment sleeve is supported by the manoeuvring member.

3. Bearing according to Claim 1, **characterized in that** the self-alignment sleeve is supported by the fixed race.

4. Bearing according to Claim 2 or Claim 3, **characterized in that** the elastic material of the said sleeve separating the tubular part of the armature and the support member of the sleeve is thin, having a thickness between that of the armature and three times the thickness of the armature.

5. Bearing according to any of Claims 2 to 4, **characterized in that** the armature is extended by a sealing portion with the rotating race.

6. Bearing according to Claim 5, **characterized in that** the armature is extended at both extremities by a sealing portion with the rotating race.

7. Bearing according to any of Claims 2 to 6, **characterized in that** the armature abuts axially against a radial surface of the support member of the sleeve.

8. Bearing according to any of Claims 2 to 7, **characterized in that** the sleeve includes axial force-fitting ribs (37) on its support member.

9. Bearing according to any preceding claim, **characterized in that** the self-alignment sleeve includes an annular bead (32) adapted to hold the said sleeve relative to the fixed race.

10. Bearing according to any preceding claim, **characterized in that** the sleeve includes means for filtering vibrations separating the radial flange and the fixed race.

11. Bearing according to any preceding claim, **characterized in that** the sleeve includes sealing means adapted to co-operate with the periphery of the rotating race.
